# EUROPÄISCHE PATENTSCHRIFT

(11) **EP 1 531 958 B1**
(45) Veröffentlichungstag und Bekanntmachung des Hinweises auf die Patenterteilung: **20.02.2008**
(21) Anmeldenummer: 02807708.9
(22) Anmeldetag: 31.08.2002
(51) Int. Cl.: B23D 51/16, B23D 51/20, H01L 41/09, B28D 1/26

(54) **WERKZEUG**
TOOL
OUTIL

(43) Veröffentlichungstag der Anmeldung: 25.05.2005
(73) Patentinhaber: AEG Electric Tools GmbH, 71364 Winnenden (DE)
(72) Erfinder: HESS, Achim, 71404 Korb (DE)
(74) Vertreter: Wasmuth, Rolf
(86) Internationale Anmeldenummer: PCT/EP2002/009744
(87) Internationale Veröffentlichungsnummer: WO 2004/020134

(56) Entgegenhaltungen:
- DE-C- 4 407 962
- GB-A- 1 240 286
- US-A- 4 173 725
- US-A- 5 055 733
- PATENT ABSTRACTS OF JAPAN vol. 015, no. 314 (M-1145), 12. August 1991 (1991-08-12) & JP 03 117513 A (SEIKOSHA CO LTD), 20. Mai 1991 (1991-05-20)

## Beschreibung

Die Erfindung betrifft ein Werkzeug, insbesondere eine Stichsäge, eine Säbelsäge, einen Bohr- oder Meißelhammer oder dgl. der im Oberbegriff des Anspruchs 1 angegebenen Gattung.

Zum oszillierenden Antrieb eines Werkzeugeinsatzes in einem Werkzeug wie einer Stichsäge, einer Säbelsäge, einem Bohr-oder Meißelhammer oder dgl. kommen Elektromotoren zum Einsatz, deren Drehbewegung mechanisch beispielsweise über Kulissen in eine translatorische, oszillierende Bewegung des Werkzeugeinsatzes umgesetzt wird. Durch die bewegten Massen entstehen hierbei Vibrationen. Gleichzeitig ist die Geräuschentwicklung durch die bewegten Teile relativ hoch. Die Hublänge der oszillierenden Bewegung sowie der zeitliche Verlauf des zurückgelegten Weges sind durch die Mechanik fest vorgegeben.

Aus der US 5,055,733 ist eine Einrichtung zur Stellwegvergrößerung bekannt, bei der in einem druckgefüllten Raum Piezoelemente angeordnet sind. In den Raum ragt ein Kolben mit geringem Durchmesser, der in einen zweiten druckgefüllten Raum ragt und dort eine große Druckfläche besitzt. In den zweiten druckgefüllten Raum ragt ein mit einem Werkzeugeinsatz verbundener Kolben. Mit dieser Anordnung läßt sich der Werkzeugeinsatz in eine Richtung, nämlich aus dem zweiten flüssigkeitsgefüllten Raum heraus, antreiben.

Der Erfindung liegt die Aufgabe zugrunde, ein Werkzeug der gattungsgemäßen Art zu schaffen, das geringe Vibrationen erzeugt und das flexibel an unterschiedliche Einsatzfälle angepaßt werden kann.

Diese Aufgabe wird durch ein Werkzeug mit den Merkmalen des Anspruchs 1 gelöst.

Durch die Verwendung eines Piezoaktors als Antriebseinheit können die zu bewegenden Massen gering gehalten werden, so daß kaum Vibrationen und Geräusche erzeugt werden. Gleichzeitig läßt sich durch die Ansteuerung des Piezoaktors die Hublänge sowie der zeitliche Verlauf des Hubs der oszillierenden Bewegung weitgehend frei einstellen. Die Kopplung des Piezoaktors mit einem Stellwegvergrößerer ermöglicht die Umsetzung der geringen Hublänge, die durch einen Piezoaktor erreicht werden, in den bei elektrisch betriebenen Werkzeugen benötigten Bereich. Der Stellwegvergrößerer bewirkt dabei eine Stellwegvergrößerung auf ein Vielfaches des ursprünglichen Wegs. Mit dem Piezoaktor können Hubfrequenzen von etwa 100 Hz, wie sie bei Elektrowerkzeugen üblich sind, leicht erreicht werden. Gleichzeitig lassen sich Kräfte von einigen 100 N und Hübe von etwa 20 mm realisieren. Durch geeignete Ansteuerung des Piezoaktors kann die Frequenz der oszillierenden Bewegung sowie die Hublänge in Bruchteilen einer Sekunde verändert und auf den jeweiligen Einsatzzweck angepaßt werden. Zusätzlich kann das Zeit-Weg-Profil variiert werden. Durch die geringe Anzahl beweglicher Teile ist die Geräuschentwicklung des Werkzeugs sehr gering.

Für den Stellwegvergrößerer ist vorgesehen, daß dieser einen Geberkolben umfaßt, der über zwei flüssigkeitsgefüllte Druckräume auf mindestens einen Nehmerkolben wirkt. Ein derartig aufgebauter Stellwegvergrößerer ist einfach herzustellen und gewährleistet gleichzeitig eine große Übersetzung der Stellwege von Geberkolben und Nehmerkolben. Gleichzeitig ist die Anzahl der bewegten Teile gering, so daß auch der Verschleiß bei einer derartigen Anordnung gering ist. Eine einfache Ausgestaltung ergibt sich, wenn der Piezoaktor und der Geberkolben fest miteinander verbunden sind. Für eine günstige Übersetzung der Stellwege beträgt die Druckfläche des Nehmerkolbens zweckmäßig 0,2 % bis 20 %, insbesondere 1 % bis 10 % der Druckfläche des Geberkolbens.

Es kann vorteilhaft sein, daß der Druckraum auf zwei Nehmerkolben wirkt, die unterschiedliche Druckflächen besitzen. Dadurch lassen sich unterschiedliche Hublängen der Nehmerkolben realisieren. Die beiden Nehmerkolben sind insbesondere gekoppelt, so daß eine gekoppelte Bewegung des Werkzeugeinsatzes ausgeführt werden kann. Auch eine Kopplung von drei oder mehr Nehmerkolben kann vorteilhaft sein. Durch die Auslegung der Druckflächen sowie der Kopplung können unterschiedlichste Bewegungsabläufe erzielt werden. Dabei können die Nehmerkolben gegenüber der Längsachse des Piezoaktors in unterschiedliche Richtungen geneigt sein.

Um den Nehmerkolben in beiden Richtungen antreiben zu können, ist vorgesehen, daß der Geberkolben und mindestens ein Nehmerkolben jeweils zwei gegenüberliegende Druckflächen aufweisen, wobei jede Druckfläche des Geberkolbens über einen abgeschlossenen Druckraum mit einer zugeordneten Druckfläche des Nehmerkolbens verbunden ist.

Der Druckraum ist vorteilhaft mit Glycerin, Kautschuk, Gummi, Fett, Öl oder Wasser gefüllt. Ein vorteilhafter Aufbau des Piezoaktors ergibt sich, wenn dieser aus geschichteten Piezoelementen gebildet ist. Dabei weist jedes Piezoelement zweckmäßig eine Dicke von 0,02 mm bis 2 mm, insbesondere von 0,5 mm bis 1 mm auf.

Ausführungsbeispiele der Erfindung werden im folgenden anhand der Zeichnung erläutert. Es zeigen:
- Fig. 1: eine Seitenansicht eines Bohr- und Meißelhammers,
- Fig. 2: einen Teilschnitt durch eine nicht erfindungsgemäße Antriebseinheit,
- Fig. 3: eine perspektivische Darstellung eines nicht erfindunsgemäßen Ausführungsbeispiels einer Antriebseinheit,
- Fig. 4: einen Teilschnitt durch die Antriebseinheit aus Fig. 3,
- Fig. 5: eine perspektivische Darstellung einer Ausführungsvariante einer Antriebseinheit,
- Fig. 6: eine Seitenansicht der Antriebseinheit aus Fig. 5,
- Fig. 7: einen Teilschnitt entlang der Linie VII-VII in Fig. 6.

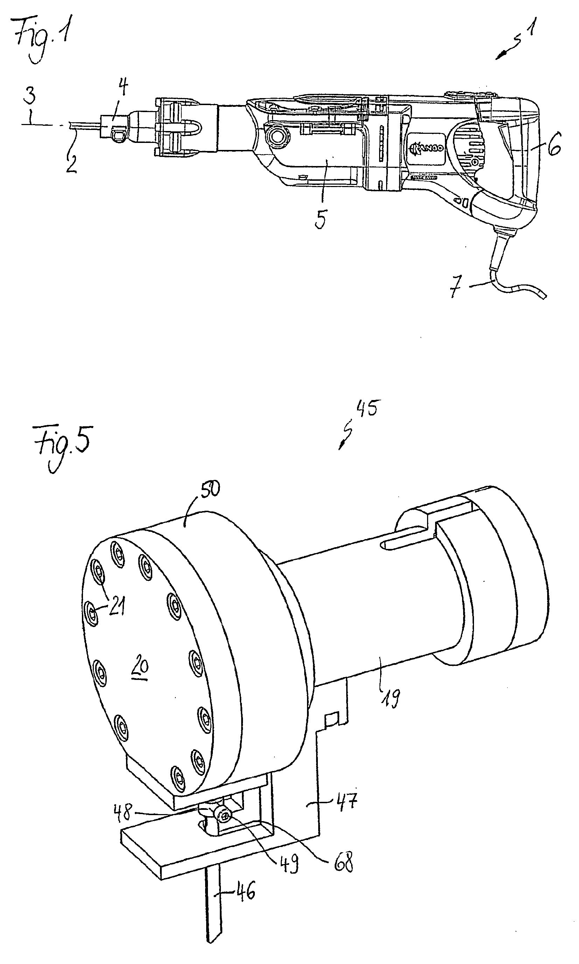

Der in Fig. 1 in Seitenansicht dargestellte Bohr- und Meißelhammer 1 besitzt einen Werkzeugeinsatz 2, der rotierend um seine Längsachse 3 sowie oszillierend in Richtung der Längsachse 3 angetrieben ist. Der Werkzeugeinsatz 2 ist in einem Spannfutter 4 am Gehäuse 5 des Bohr-und Meißelhammers 1 festgelegt. Am Gehäuse 5 ist ein Bediengriff 6 angeordnet. Der Bohr- und Meißelhammer 1 ist elektrisch angetrieben. Zur Versorgung der elektrischen Antriebseinheit ist eine Leitung 7 vorgesehen.

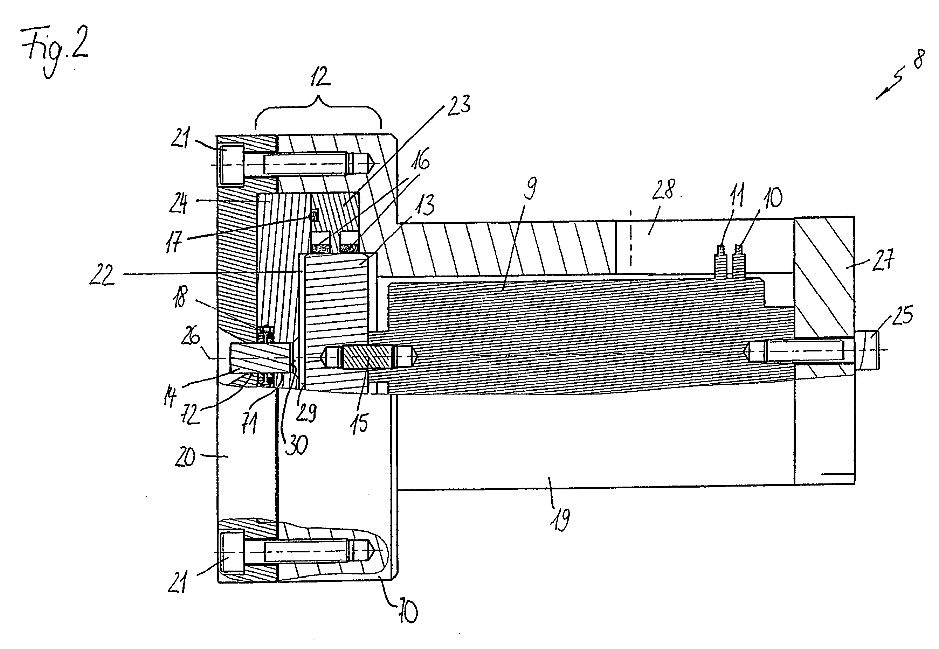

In Fig. 2 ist eine Antriebseinheit 8 zum oszillierenden Antrieb des Werkzeugeinsatzes 2 in Richtung der Längsachse 3 im Teilschnitt dargestellt. Zum rotierenden Antrieb des Werkzeugeinsatzes 2 um die Längsachse 3 ist ein zusätzlicher, nicht dargestellter Antrieb vorgesehen. Die Antriebseinheit 8 besitzt einen in einem Gehäuse 19 angeordneten Piezoaktor 9 sowie einen Stellwegvergrößerer 12. Der Piezoaktor 9 ist am Boden 27 des Gehäuses 19 über eine Befestigungsschraube 25 festgelegt. Der Piezoaktor 9 besitzt zwei Anschlüsse 10 und 11, die durch einen Schlitz 28 auf die Außenseite des Gehäuses 19 ragen. Der Anschluß 10 kann dabei ein Anschluß für die elektrische Spannung sein und der Anschluß 11 ein Anschluß für die Reglerüberwachung. Bei Anlegen einer Spannung dehnt sich der Piezoaktor 9 in Richtung der Längsachse 26 aus. Der Piezoaktor 9 ist aus einzelnen, paketförmig aufeinandergeschichteten Piezoelementen aufgebaut. Die einzelnen Piezoelemente besitzen dabei eine Dicke von 0,02 mm bis 2 mm. Vorteilhaft besitzen die Piezoelemente eine Dicke von 0,5 mm bis 1 mm. Um einen ausreichenden Stellweg zu erzeugen, ist vorgesehen, daß der Piezoaktor 9 in Richtung der Längsachse 26 einen Länge von 100 mm bis 200 mm, insbesondere von 130 mm bis 160 mm aufweist.

Der Stellwegvergrößerer 12 umfaßt einen Geberkolben 13 und einen Nehmerkolben 14, die über einen Druckraum 22 miteinander gekoppelt sind. Die Druckfläche 29 des Geberkolbens 13 ist dabei wesentlich größer als die Druckfläche 30 des Nehmerkolbens 14. Vorteilhaft beträgt die Druckfläche 30 des Nehmerkolbens 14 0,2 % bis 20 %, insbesondere 1 % bis 10 % der Druckfläche 29 des Geberkolbens 13. Der Geberkolben 13 ist über einen Gewindebolzen 15 fest mit dem Piezoaktor 9 verbunden. Im Bereich des Stellwegvergrößerers 12 besitzt das Gehäuse 19 einen Absatz 70 mit vergrößertem Durchmesser. In dem Absatz 70 ist ein Ring 23 gelagert, in dem der Geberkolben 13 geführt und über zwei Dichtungen 16 abgedichtet ist. An der Stirnseite des Geberkolbens 13 ist eine Scheibe 24 angeordnet, die eine mittige Bohrung 71 besitzt. In der Bohrung 71 ist der Nehmerkolben 14 geführt und mit einer Dichtung 18 gegenüber der Umgebung abgedichtet. Zwischen der Scheibe 24 und dem Ring 23 ist ein O-Ring 17 zur Abdichtung angeordnet. Zwischen dem Geberkolben 13 und der Scheibe 24 ist der Druckraum 22 gebildet. Das Gehäuse 19 ist mit einem Deckel 20 verschlossen, der mit Schrauben 21 am Gehäuse 19 festgelegt ist. Der Deckel 20 hält dabei gleichzeitig die Scheibe 24. Der Nehmerkolben 14 durchragt den Deckel 19 an einer Bohrung 72. Der Druckraum 22 ist vorteilhaft mit Glycerin, Kautschuk, Gummi, Fett, Ö1 oder Wasser gefüllt. Auch eine Füllung mit anderen Fluiden oder mit einer Mischung aus mehreren Fluiden kann vorteilhaft sein.

Zum oszillierenden Antrieb des Nehmerkolbens 14 wird über den Anschluß 10 am Piezoaktor 9 eine Spannung angelegt.

Aufgrund der Spannung dehnt sich der Piezoaktor 9 in Richtung der Längsachse 26 aus. Hierdurch übt der Geberkolben 13 auf den Druckraum 22 eine Kraft aus. Der aufgrund der Kraft erhöhte Druck im Druckraum 22 führt zu einer Kraft auf den Nehmerkolben 14. Dieser wird in Richtung der Längsachse 26 aus dem Gehäuse 19 gedrückt und treibt hierdurch einen insbesondere in Richtung der Längsachse 26 angeordneten Werkzeugeinsatz an. Die Rückbewegung des Nehmerkolbens 14 erfolgt über die vom Werkstück auf den Werkzeugeinsatz und den Nehmerkolben 14 übertragene Kraft. Um den Nehmerkolben 14 in Richtung der Längsachse 26 zu sichern, kann es zweckmäßig sein, daß der Nehmerkolben 14 an seinem dem Geberkolben 13 zugewandten Ende einen Absatz aufweist, dessen Durchmesser größer als der Durchmesser der Bohrungen 71 und 72 ist, so daß ein Herausdrücken des Nehmerkolbens 14 aus dem Gehäuse 19 verhindert ist.

In einer nicht erfindungsgemäßen Ausführungsform kann es vorteilhaft sein, anstatt des hydraulischen Stellwegvergrößerers einen mechanischen Stellwegvergrößerer vorzusehen. Der Piezoaktor kann dabei über eine Hebelmechanik mit dem Werkzeugeinsatz gekoppelt sein. Auch die Übertragung der Bewegung des Piezoaktors über eine Getriebeanordnung auf den Werkzeugeinsatz kann vorteilhaft sein.

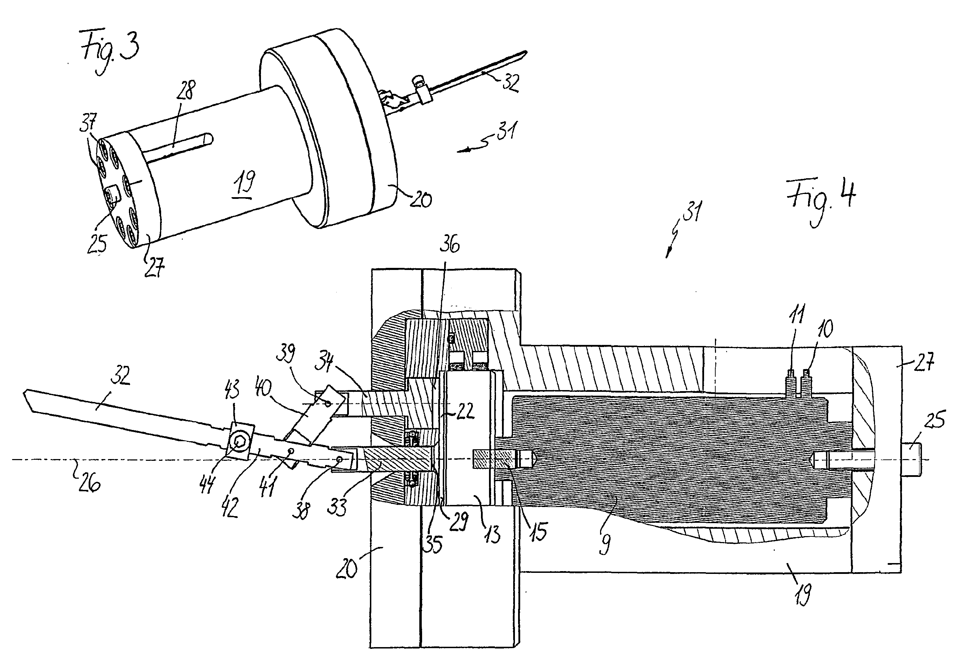

In den Figuren 3 und 4 ist ein nicht erfindungsgemäßes Ausfuhrungsbeispiel dargestellt. Gleiche Bezugszeichen bezeichnen dabei gleiche Bauteile wie in Fig. 2. An der in Fig. 3 perspektivisch dargestellten Antriebseinheit 31 ist ein Werkzeugeinsatz 32 angeordnet, der beispielsweise ein Sägeblatt sein kann. Die Antriebseinheit 31 besitzt ein Gehäuse 19 mit einem Deckel 20 und einem Boden 27. Der Boden 27 ist mit Schrauben 37 am Gehäuse 19 fixiert. Der in Fig. 4 dargestellte Geberkolben 13 wirkt über den mit Kautschuk, Glycerin, Gummi, Fett, Öl oder Wasser gefüllten Druckraum 22 auf zwei Nehmerkolben 33 und 34. Der erste Nehmerkolben 33 besitzt eine Druckfläche 35 und der zweite Nehmerkolben 34 eine Druckfläche 36. Die Druckfläche 36 ist dabei größer als die Druckfläche 35. Somit legt der erste Nehmerkolben 33 bei einer bestimmten Auslenkung des Geberkolbens 13 einen größeren Weg zurück als der zweite Nehmerkolben 34.

Am ersten Nehmerkolben 33 ist über ein Gelenk 38 ein Stellhebel 42 schwenkbar gelagert. Der Stellhebel 42 besitzt eine Aufnahme 43 für den Werkzeugeinsatz 32. Der Werkzeugeinsatz 32 wird in der Aufnahme 43 über eine Schraube 44 fixiert. Der zweite Nehmerkolben 34 ist mit dem ersten Nehmerkolben 33 über einen Koppelhebel 40 gekoppelt. Der Koppelhebel 40 ist dabei am zweiten Nehmerkolben 34 über ein Gelenk 39 schwenkbar gelagert. Der Koppelhebel 40 ist über ein Gelenk 41 mit dem Stellhebel 42 verbunden. Das Gelenk 41 befindet sich dabei auf der dem Druckraum 22 abgewandten Seite des Gelenks 38. Durch die Kopplung der beiden Nehmerkolben 33 und 34 führt der Werkzeugeinsatz 32 eine oszillierende Bewegung durch, die sich aus einer Bewegung in Richtung der Längsachse 26 und einer Schwenkbewegung um das Gelenk 38 zusammensetzt.

Über die Kopplung von zwei oder mehreren Nehmerkolben können unterschiedliche Bewegungen des Werkzeugeinsatzes 32 erreicht werden. Es kann zweckmäßig sein, drei oder mehr Nehmerkolben miteinander zu koppeln. Dabei können ein oder mehrere Nehmerkolben zur Längsachse 26 geneigt angeordnet sein.

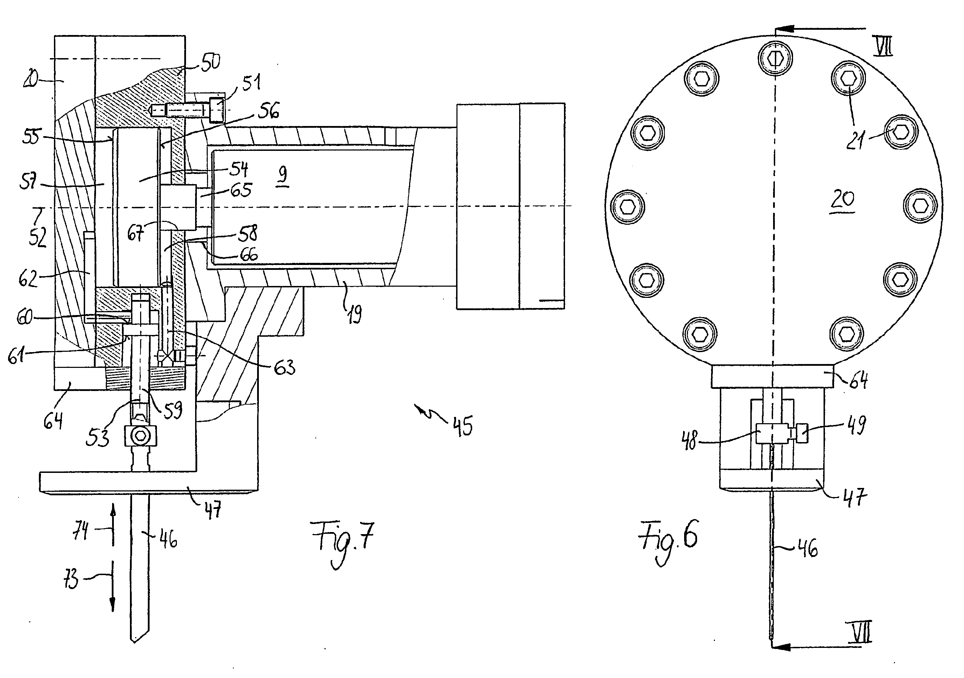

Fig. 5 zeigt eine Antriebseinheit 45, wie sie beispielsweise für eine Stichsäge Verwendung finden kann. Gleiche Bezugszeichen bedeuten in Fig. 5 gleiche Bauteile wie in Fig. 1. Die Antriebseinheit 45 besitzt ein Gehäuse 19, an dem eine Auflage 47 für das Werkzeug fixiert ist. Die Auflage 47 besitzt eine Öffnung 68, durch die der Werkzeugeinsatz 46, insbesondere ein Sägeblatt, ragt. Der Werkzeugeinsatz 46 ist in einer Aufnahme 48 über eine Schraube 49 fixiert. Mit dem Gehäuse 19 ist ein Gehäusetopf 50 verbunden, der mit dem Deckel 20 über Befestigungsschrauben 21 verschlossen ist. Wie in Fig. 6 dargestellt, ist auf der dem Werkzeugeinsatz 46 zugewandten Seite des Gehäusetopfes 50 und des Deckels 20 eine Platte 64 fixiert.

Fig. 7 zeigt die Antriebseinheit 45 im Teilschnitt. Der Gehäusetopf 50 ist am Gehäuse 19 über Befestigungsschrauben 51 fixiert. Es kann jedoch auch zweckmäßig sein, Gehäuse 19 und Gehäusetopf 50 einteilig auszubilden. Im Gehäuse 19 ist ein Piezoaktor 9 angeordnet, der aus paketförmig aufeinandergeschichteten einzelnen Piezoelementen aufgebaut ist. Der Piezoaktor 9 ist über eine Verbindung 65 fest mit einem Geberkolben 54 verbunden. Die Verbindung 65 durchragt dabei eine Bohrung 66 im Gehäuse 19 sowie eine Bohrung 67 im Gehäusetopf 50. Die Bohrung 67 ist dabei so ausgebildet, daß sie mit der Verbindung 65 dicht abschließt. Der Geberkolben 54 besitzt eine erste Druckfläche 55 auf der dem Piezoaktor 9 abgewandten Seite sowie eine zweite Druckfläche 56 auf der dem Piezoaktor 9 zugewandten Seite. Die zweite Druckfläche 56 ist dabei um die Fläche der Verbindung 65 kleiner als die erste Druckfläche 55.

An der Platte 64 ist ein Nehmerkolben 59 gelagert, der in Richtung der Bewegungsachse 53 beweglich ist. Die Bewegungsachse 53 erstreckt sich dabei etwa senkrecht zur Längsachse 52 des Piezoaktors 9. Die Längsachse 52 stellt gleichzeitig die Bewegungsachse des Geberkolbens 54 dar. Der Nehmerkolben 59 besitzt eine erste, dem Werkzeugeinsatz 46 abgewandte Druckfläche 60 und eine zweite, dem Werkzeugeinsatz 46 zugewandte Druckfläche 61. Die beiden Druckflächen 60 und 61 sind gleich groß. Die erste Druckfläche 60 steht über eine Verbindung 62 mit dem ersten Druckraum 57 in fluidischer Verbindung. Der erste Druckraum 57 grenzt dabei an die erste Druckfläche 55 des Geberkolbens 54 an. Der an der zweiten Druckfläche 56 gebildete zweite Druckraum 58 steht über eine Verbindung 63 mit der zweiten Druckfläche 61 in Verbindung. Die Verbindungen 62 und 63 sind als Kanäle ausgebildet.

Bei Bewegung des Geberkolbens 54 in Richtung auf den Druckraum 57 wird im ersten Druckraum 57 ein Überdruck erzeugt. Hierdurch wird eine Kraft auf die erste Druckfläche 60 des Nehmerkolbens 59 in Richtung des Pfeils 73 ausgeübt. Gleichzeitig entsteht im zweiten Druckraum 58 ein Unterdruck, der auf die zweite Druckfläche 61 eine Kraft in Richtung des Pfeils 73 auswirkt. Der Werkzeugeinsatz 46 wird somit in Richtung des Pfeils 73 bewegt. Zur Rückbewegung in Richtung des Pfeils 74 wird am Piezoaktor 9 die Spannung insbesondere bis auf Null abgesenkt, wodurch eine Bewegung des Geberkolbens 54 in Richtung auf den Druckraum 58 bewirkt wird. Der dadurch im Druckraum 58 erzeugte Überdruck übt auf die zweite Druckfläche 61 eine Kraft in Richtung des Pfeils 74 aus. Der gleichzeitig im Druckraum 57 entstehende Unterdruck übt auf die Druckfläche 60 eine Kraft in Richtung des Pfeils 74 aus. Somit bewegt sich der Werkzeugeinsatz 46 in Richtung des Pfeils 74. Somit ist der Werkzeugeinsatz 46 in beiden Bewegungsrichtungen angetrieben. Es kann zweckmäßig sein, einen oder mehrere weitere Nehmerkolben an einem oder an beiden Druckräumen anzuordnen, die mit dem Nehmerkolben 59 gekoppelt sind. Hierdurch kann eine überlagerte Bewegung erreicht werden. Beispielsweise kann der Nehmerkolben 59 zusätzlich zu der senkrecht zur Längsachse 52 verlaufenden Bewegung verschwenkt werden.

Eine Antriebseinheit aus einem Piezoaktor und einem Stellwegvergrößerer kann als alleiniger Antrieb in einem Werkzeug dienen. Es kann jedoch zweckmäßig sein, die Antriebseinheit mit einer oder mehreren Antriebseinheiten zu koppeln. So kann insbesondere zum rotierenden Antrieb eines Werkzeugeinsatzes zusätzlich ein Elektromotor zum Einsatz kommen. Die Antriebseinheit kann für alle Arten von hin-und hergehenden Bewegungen zum Einsatz kommen. Je nach Auslegung des Stellwegvergrößerers können unterschiedliche Hubwege und Kräfte erzielt werden. Durch geeignete Anordnung und Kopplung eines oder mehrerer Nehmerkolbens können unterschiedlichste Bewegungsabläufe realisiert werden. Der Stellwegvergroßerer wirkt hydraulisch. Der Druckraum des Stellwegvergrößerers ist dabei vorteilhaft mit Glycerin, Kautschuk, Gummi, Fett oder mit Fluiden wie Ö1 oder Wasser gefüllt. Auch andere Füllmedien können zweckmäßig sein.

In einer nicht erfindungsgemäßen Ausführungsform kann jedoch auch ein mechanischer Stellwegvergrößerer vorgesehen sein. Der mechanische Stellwegvergrößerer kann den Stellweg beispielsweise über eine Hebelmechanik vergrößern. Auch eine Vergrößerung über eine Getriebeanordnung kann vorteilhaft sein.

## Patentansprüche

1. Werkzeug, insbesondere Stichsäge, Säbelsäge, Bohr- oder Meißelhammer oder dgl., mit einem Werkzeugeinsatz 46), der von einer elektrisch betriebenen Antriebseinheit oszillierend angetrieben ist, wobei die Antriebseinheit (31 ) einen Piezoaktor (9) und einen mit dem Piezoaktor (9) gekoppelten Stellwegvergrößerer (12) umfaßt-, wobei der Stellwegvergrößerer (12) einen Geberkolben (54) umfaßt, / der über mindestens einen flüssigkeitsgefüllten Druckraum (57, 58) auf mindestens einen Nehmerkolben (59) wirkt, / **dadurch gekennzeichnet, daß** der Geberkolben (54) und mindestens ein Nehmerkolben (59) jeweils zwei gegenüberliegende Druckflächen (55, 56; 60, 61) aufweisen, wobei jede Druckfläche (55, 56) des Geberkolbens (54) über einen abgeschlossenen Druckraum (57; 58) mit einer zugeordneten Druckfläche (60, 61) des Nehmerkolbens (59) verbunden ist.

2. Werkzeug nach Anspruch 1,
**dadurch gekennzeichnet, daß** der Piezoaktor (9) und der Geberkolben (13, 54) fest miteinander verbunden sind.

3. Werkzeug nach Anspruch 1 oder 2,
**dadurch gekennzeichnet, daß** die Druckfläche (30, 35, 36, 60, 61) des Nehmerkolbens (14, 33, 34, 59) 0,2 % bis 20 %, insbesondere 1 % bis 10 % der Druckfläche (29, 55, 56) des Geberkolbens (13, 54) beträgt.

4. Werkzeug nach einem der Ansprüche 1 bis 3,
**dadurch gekennzeichnet, daß** der Druckraum (20) auf zwei Nehmerkolben (33, 34) wirkt, die unterschiedliche Druckflächen (35, 36) besitzen.

5. Werkzeug nach Anspruch 4,
**dadurch gekennzeichnet, daß** die beiden Nehmerkolben (33, 34) gekoppelt sind.

6. Werkzeug nach einem der Ansprüche 1 bis 5,
**dadurch gekennzeichnet, daß** mindestens ein Druckraum (20, 57, 58) mit Glycerin, Kautschuk, Gummi, Fett, Öl oder Wasser gefüllt ist.

7. Werkzeug nach einem der Ansprüche 1 bis 6,
**dadurch gekennzeichnet, daß** der Piezoaktor (9) aus geschichteten Piezoelementen aufgebaut ist.

8. Werkzeug nach Anspruch 7,
**dadurch gekennzeichnet, daß** jedes Piezoelement eine Dicke von 0,02 mm bis 2 mm, insbesondere von 0,5 mm bis 1 mm aufweist.

## Claims

1. Tool, in particular compass saw, sable saw, hammer drill, chipping hammer or similar tool, with a tool insert (46) driven for oscillating motion by an electrically driven drive unit (45), wherein the drive unit (45) comprises a piezoelectric actuator (9) and an actuator travel amplifier (12) coupled to the piezoelectric actuator (9), the actuator travel amplifier (12) comprising a master piston (54) acting on at least one slave piston (59) via at least one fluid-filled pressure chamber (57, 58), **characterised in that** the master piston (54) and the at least one slave piston (59) each have two opposite pressure surfaces (55, 56; 60, 61), wherein each pressure surface (55, 56) of the master piston (54) is connected to a corresponding pressure surface (60, 61) of the slave piston (59) via a closed pressure chamber (57; 58).

2. Tool according to claim 1,
**characterised in that** the piezoelectric actuator (9) and the master piston (13, 54) are permanently joined to one another.

3. Tool according to claim 1 or 2,
**characterised in that** the pressure surface (30, 35, 36, 60, 61) of the slave piston (14, 33, 34, 59) amounts to 0.2% to 20%, in particular 1% to 10%, of the pressure surface (29, 55, 56) of the master piston (13, 54).

4. Tool according to any of claims 1 to 3,
**characterised in that** the pressure chamber (20) acts on two slave pistons (33, 34) with different pressure surfaces (35, 36).

5. Tool according to claim 4,
**characterised in that** the two slave pistons (33, 34) are coupled.

6. Tool according to any of claims 1 to 5,
**characterised in that** at least one pressure chamber (20, 57, 58) is filled with glycerine, unvulcanised or vulcanised rubber, grease, oil or water.

7. Tool according to any of claims 1 to 6,
**characterised in that** the piezoelectric actuator (9) is constructed of layered piezoelectric elements.

8. Tool according to claim 7,
**characterised in that** each piezoelectric element has a thickness of 0.02 mm to 2 mm, in particular 0.5 mm to 1 mm.

## Revendications

1. Outil, en particulier scie à guichet, scie sabre, marteau perforateur ou burineur ou semblable, comportant un insert d'outil (46), qui est actionné de manière oscillatoire par une unité d'entraînement à fonctionnement électrique (45), ladite unité d'entraînement (31) comprenant un acteur piézo-électrique (9) et un agrandisseur de parcours de réglage (12) couplé à l'acteur piézo-électrique (9), ledit agrandisseur de parcours de réglage (12) comprenant un piston maître (54) qui agit sur au moins un piston esclave (59) par l'intermédiaire d'au moins une chambre de pression (57, 58) remplie de liquide, **caractérisé en ce que** le piston maître (54) et au moins un piston esclave (59) présentent respectivement deux surfaces de pression opposées (55, 56 ; 60, 61), chaque surface de pression (55, 56) du piston maître (54) étant reliée avec une surface de pression associée (60, 61) du piston esclave (59) par l'intermédiaire d'une chambre de pression assignée (57 ; 58).

2. Outil selon la revendication 1, **caractérisé en ce que** l'acteur piézo-électrique (9) et le piston maître (13, 54) sont reliés ensemble de manière fixe.

3. Outil selon la revendication 1 ou 2, **caractérisé en ce que** la surface de pression (30, 35, 36, 60, 61) du piston esclave (14, 33, 34, 59) est comprise entre 0,2 % et 20 %, en particulier entre 1 % et 10 % de la surface de pression (29, 55, 56) du piston maître (13, 54).

4. Outil selon l'une quelconque des revendications 1 à 3, **caractérisé en ce que** la chambre de pression (20) agit sur deux pistons esclaves (33, 34), qui disposent de différentes surfaces de pression (35, 36).

5. Outil selon la revendication 4, **caractérisé en ce que** les deux pistons esclaves (33, 34) sont couplés.

6. Outil selon l'une quelconque des revendications 1 à 5, **caractérisé en ce qu'**au moins une chambre de pression (20, 57, 58) est remplie de glycérine, de caoutchouc, de gomme, de graisse, d'huile ou d'eau.

7. Outil selon l'une quelconque des revendications 1 à 6, **caractérisé en ce que** l'acteur piézo-électrique (9) est constitué d'éléments piézo-électriques superposés.

8. Outil selon la revendication 7, **caractérisé en ce que** chaque élément piézo-électrique présente une épaisseur comprise entre 0,02 mm et 2 mm, en particulier entre 0,5 mm et 1 mm.
